# EUROPEAN PATENT SPECIFICATION

(11) **EP 2 265 659 B1**
(45) Date of publication and mention of the grant of the patent: **28.01.2026**
(21) Application number: 09723793.7
(22) Date of filing: 03.03.2009
(51) Int. Cl.: C08G 63/199, C08G 63/183, C08G 63/06, C08G 63/19, C08G 63/91, C08L 67/03, C08L 67/04, C08L 93/00, C08G 63/78

(54) **CONTAINER COMPRISING A BIO-BASED POLYETHYLENE TEREPHTHALATE POLYMER**
BEHÄLTER AUS POLYETHYLENTEREPHTHALATPOLYMER AUF BIOBASIS
RÉCIPIENT À BASE DE POLYMÈRE DE POLYÉTHYLÈNE TÉRÉPHTALATE D ORIGINE BIOLOGIQUE

(30) Priority: 28.03.2008 US 40349 P; 14.09.2008 US 210208
(43) Date of publication of application: 29.12.2010
(60) Divisional application: 17195879.6
(73) Proprietor: The Coca-Cola Company, Atlanta, GA 30313 (US)
(72) Inventor: KRIEGEL, Robert M., Decatur Georgia 30030 (US); HUANG, Xiaoyan, Marietta Georgia 30068 (US); SCHULTHEIS, Mikell, W., Acworth GA 30102 (US)
(74) Representative: Dehns
(86) International application number: PCT/US2009/035849
(87) International publication number: WO 2009/120457

(56) References cited:
- EP-A1- 1 842 868
- EP-A1- 1 882 712
- WO-A1-2007/089600
- GB-A- 789 809
- US-A1- 2006 135 998
- US-B2- 6 927 275
- DATABASE WPI Week 200768, Derwent World Patents Index; AN 2007-721881, XP002722982
- C. OKKERSE ET AL: "From fossil to green", GREEN CHEMISTRY, vol. 1, no. 2, 1 January 1999 (1999-01-01), GB, pages 107 - 114, XP055360116, ISSN: 1463-9262, DOI: 10.1039/a809539f

## Description

### FIELD OF INVENTION

This invention relates generally to a bio-based container comprising bio-based polyethylene terephthalate polymer that contains a diol component that derives partially or totally from bio-based materials.

### BACKGROUND

Polyethylene terephthalate and its copolyesters (hereinafter referred to collectively as "PET" or "polyethylene terephthalate") is a widely used raw material for making packaging articles in part due to their excellent combination of clarity, mechanical, and gas barrier properties. Examples of PET products include, but are not limited to, bottles and containers for packaging food products, soft drinks, alcoholic beverages, detergents, cosmetics, pharmaceutical products and edible oils.

Most commercial methods produce PET with petrochemically derived raw materials. Therefore, the cost of production is closely tied to the price of petroleum. Petrochemically-derived PET contributes to greenhouse emissions due to its high petroleum derived carbon content. Furthermore, petrochemicals take hundreds of thousands of years to form naturally, making petrochemically-derived products non-renewable, which means they cannot be re-made, re-grown, or regenerated at a rate comparative to its consumption.

One approach to substituting petrochemically-derived PET has been the production of polylactic acid (PLA) bioplastics from bio-based materials such as corn, rice, or other sugar and starch-producing plants. See e.g. U.S. Pat. No. 6,569,989. As described in U.S. Pat. No. 5,409,751 and U.S. Pat. App. No. 20070187876, attempts have been made to use PLA resins in injection stretch molding processes for producing containers. However, it is often difficult to adapt PLA into current PET production lines or to satisfactorily substitute PET with PLA in many applications due to the significantly different properties between PLA and PET. For example, PLA typically has a lower gas barrier property than PET, which makes PLA containers less suitable for storing items such as carbonated beverages or beverages sensitive to oxygen. Furthermore, most recycling systems currently in use are designed for PET, which would be contaminated if PLA was introduced. This problem could be overcome by costly solutions such as using distinctive bottle types between PLA and PET or by investing in suitable sorting technology or new recycling streams. JP2007/176873 discloses a method for producing a raw material of a resin that is derived from biomass.
EP1882712 discloses a method for producing a polyester derived from biomass resource.

Thus, there exists a need for a PET derived from renewable resources that shares similar properties as petroleum-derived PET. It would be also desirable in some applications if the PET derived from renewable resources can be processed through existing PET manufacturing facilities and/or can be readily recycled through the systems designed for recycling petroleum-derived PET.

Other objects, features, and advantages of this invention will be apparent from the following detailed description, drawings, and claims.

### BRIEF DESCRIPTION OF THE DRAWING

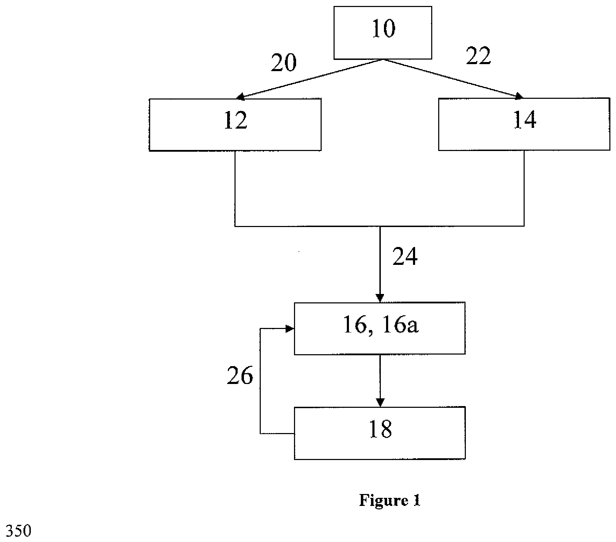

Fig. 1 is a flowchart illustration of the method of making a bio-based polyethylene terephthalate product that partially or totally derives from bio-based materials.

### DETAILED DESCRIPTION OF THE PRESENT INVENTION

The term "bio-based," as used in this application, indicates the inclusion of some component that derives from at least one bio-based material. For example, a "bio-based PET polymer" would be a PET polymer that comprises at least one component that partially or totally derives from at least one bio-based material.

### Bio-Based PET Polymer

The present invention encompasses a bio-based container comprising a bio-based PET polymer that comprises from 25 to 75 weight percent of a terephthalate component and from 20 to 50 weight percent of a diol component, wherein at least ten weight percent of the diol component is derived from at least one bio-based material, and wherein the terephthalate component is not derived from at least one bio-based material. The diol component is selected from ethylene glycol, cyclohexane dimethanol and a combination thereof, with the proviso that the diol component comprises at least one weight percent of cyclohexane dimethanol. The terephthalate component is terephthalic acid. In a more particular embodiment, at least about 20 weight percent of the diol component is derived from at least one bio-based material.

In one embodiment, the bio-based PET polymer comprises from about 30 to about 70 weight percent of the terephthalate component. In a more particular embodiment, the bio-based PET polymer comprises from about 40 to about 65 weight percent of the terephthalate component. In another embodiment, the bio-based PET polymer comprises from about 25 to about 45 weight percent of the diol component. In a more particular embodiment, the bio-based PET polymer comprises from about 25 to about 35 weight percent of the diol component.

The terephthalate component is terephthalic acid.

The diol component is selected from ethylene glycol, cyclohexane dimethanol, and a combination thereof; and the diol component comprises at least one weight percent of cyclohexane dimethanol. At least ten weight percent of the diol component is derived from at least one bio-based material.

Other ingredients may be added to the bio-based PET polymer. Those of ordinary skill in the art would readily be able to select the suitable ingredient(s) to add to the bio-based PET polymer to improve the desired properties, which may depend on the type of application intended. In a particular embodiment, the bio-based PET polymer may further comprise a supplemental component selected from at least one coloring agent, at least one fast reheat additive, at least one gas barrier additive, at least one UV blocking additive, and a combination thereof.

Bio-based PET polymers may be used to form bio-based resins, which may be further processed into bio-based containers using methods including, but not limited to, injection molding and stretch blow molding. To be suitable for certain applications, containers have a certain intrinsic viscosity to withstand movements, shelving, and other requirements. In a particular embodiment of the present invention, the bio-based container has an intrinsic viscosity from 0.45 dL/g to 1.0 dL/g.

It is known in the art that carbon-14 (C-14), which has a half life of about 5,700 years, is found in bio-based materials but not in fossil fuels. Thus, "bio-based materials" refer to organic materials in which the carbon comes from non-fossil biological sources. Examples of bio-based materials include, but are not limited to, sugars, starches, corns, natural fibers, sugarcanes, beets, citrus fruits, woody plants, cellulosics, lignocelluosics, hemicelluloses, potatoes, plant oils, other polysaccharides such as pectin, chitin, levan, and pullulan, and a combination thereof. According to a particular embodiment, the at least one bio-based material is selected from corn, sugarcane, beet, potato, starch, citrus fruit, woody plant, cellulosic lignin, plant oil, natural fiber, oily wood feedstock, and a combination thereof.

As explained previously, the detection of C-14 is indicative of a bio-based material. C-14 levels can be determined by measuring its decay process (disintegrations per minute per gram carbon or dpm/gC) through liquid scintillation counting. In one embodiment of the present invention, the bio-based PET polymer comprises at least about 0.1 dpm/gC (disintegrations per minute per gram carbon) of C-14.

The invention is further illustrated by the following example:

### Example I

The following samples were measured, in a blind test fashion, to determine the presence of C-14 content by liquid scintillation counting. The levels detected were normalized to existing data available at University of Georgia that correlates the C-14 level to the bio-based percentage. The results are shown in Table 1.

**Table 1**

| **Sample ID** | **Sample Description** | **C-14 (dpm/gC)** | **% bio-based material** |
|---|---|---|---|
| 1 | Ethylene glycol (totally derived from ethanol converted from sugars) | 15 ± 0.13 | 100 ± 1 |
| 2 | Ethylene glycol (totally derived from corn) | 15 ± 0.13 | 98 ± 1 |
| 3 | Ethylene glycol (totally derived from petroleum) | 0.04 ± 0.13 | 0 ± 1 |
| 4 | Ethylene glycol (totally derived from petroleum) | 0.04 ± 0.13 | 0 ± 1 |
| 5 | PET (totally derived from petroleum) | 0.07 + 0.13 | 0 ± 1 |
| 6 | PET (contains about 30 wt% of ethylene glycol from sample 1 and about 70 wt% of terephthalic acid derived from petroleum) | 3.01 ± 0.13 | 21 ± 1 |

As shown in Table 1, samples totally derived from petroleum (samples 3, 4, and 5) contain a negligible amount of C-14, indicating that about zero percent of the sample is made from bio-based materials. In contrast, samples that contain materials known to be partially or totally derived from a bio-based material (corn or sugar) show a much higher level of C-14. Based on the data, about 0.14 dpm/gC corresponds to about one percent of bio-based material in the sample.

### Method of Making Polyethylene Terephthalate Polymer

Fig. 1 shows a process for producing a bio-based PET polymer **16** for use in the present invention, the process comprising obtaining a diol component **12** comprising ethylene glycol **12a** [step **20**], obtaining a terephthalate component **14** comprising terephthalic acid [step **22**], wherein at least ten weight percent of the diol component (**12**) is derived from at least one bio-based material **10**, reacting the diol component **12** and the terephthalate component **14** to form a bio-based PET polymer **16** [step **24**], wherein the bio-based PET polymer **16** comprises from 25 to 75 weight percent of the terephthalate component **14** and from 20 to 50 weight percent of the diol component **12.** As illustrated in Reaction I, step **24** may further comprise reacting the diol component **12** and the terephthalate component **14** through an esterification reaction to form bio-based PET monomers **16a**, which then undergo polymerization to form the bio-based PET polymer **16.**

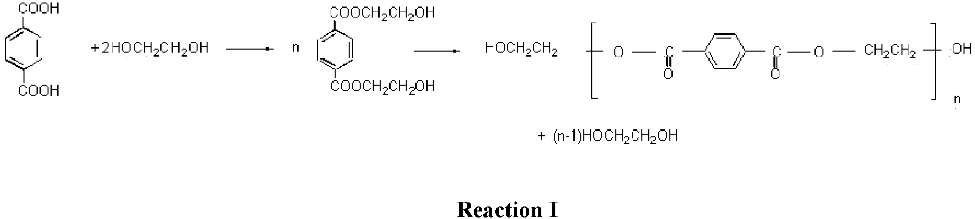

At least ten weight percent of the diol component **12** is derived from at least one bio-based material **10.** In still a more particular embodiment, at least 30 weight percent of the diol component **12** is derived from at least one bio-based material 10.

The diol component **12** may be partially or totally derived from at least one bio-based material using any process. Step **20** may comprise obtaining a sugar or derivatives thereof from at least one bio-based material and fermenting the sugar or derivatives thereof to ethanol. Alternatively, step **20** may comprise gasification of at least one bio-based material **10** to produce syngas, which is converted to ethanol. Alternatively, as illustrated by Reaction II, step **20** may further comprise dehydrating ethanol to ethylene, oxidizing ethylene to ethylene oxide, and converting ethylene oxide to ethylene glycol. 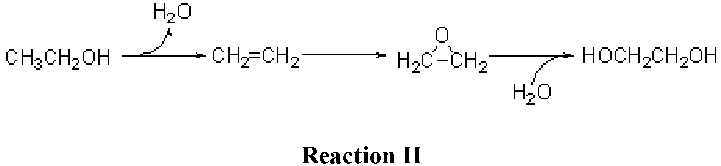 Step **20** may comprise obtaining a sugar or derivatives thereof from at least one bio-based material and converting the sugar or derivatives thereof to a mixture comprising ethylene glycol and at least one glycol excluding the ethylene glycol. Step **20** further comprises isolating the ethylene glycol from the mixture. The mixture may be repeatedly reacted to obtain higher yields of ethylene glycol. The at least one glycol may be selected from butanediols, propandiols, and glycerols.

In one embodiment, at least 70 weight percent of the diol component **12** is derived from at least one bio-based material **10.** According to a particular embodiment, the bio-based material is selected from corn, sugarcane, beet, potato, starch, citrus fruit, woody plant, cellulosic lignin, plant oil, natural fiber, oily wood feedstock, and a combination thereof.

The method described above may further comprise making a bio-based PET product **18** from the bio-based PET polymer **16.** The bio-based PET product **18** may be used in various applications, including, but not limited to, as a beverage container. In another embodiment, the bio-based PET product **18** may be recycled or reused through recycling systems [step **26**] designed for petroleum-derived PET products.

## Claims

1. A bio-based container comprising a bio-based polyethylene terephthalate (PET) polymer, wherein the polymer comprises
from 25 to 75 weight percent of a terephthalate component, wherein the terephthalate component is terephthalic acid; and
from 20 to 50 weight percent of a diol component, wherein the diol component is selected from ethylene glycol, cyclohexane dimethanol and a combination thereof;
wherein at least ten weight percent of the diol component is derived from at least one bio-based material;
wherein the terephthalate component is not derived from at least one bio-based material; and
wherein the diol component comprises at least one weight percent of cyclohexane dimethanol.

2. The bio-based container of claim 1, wherein the diol component totally derives from at least one bio-based material.

3. The bio-based container of claim 1, wherein the at least one bio-based material is selected from corn, sugarcane, beet, potato, starch, citrus fruit, woody plant, cellulosic lignin, plant oil, natural fiber, oily wood feedstock and a combination thereof.

4. The bio-based container of claim 1, wherein the polyethylene terephthalate polymer further comprises a supplemental component selected from at least one coloring agent, at least one fast reheat resistant additive, at least one gas barrier additive, at least one UV blocking additive and a combination thereof.

5. The bio-based container of claim 1, wherein at least 20 weight percent of the diol component is derived from at least one bio-based material.

6. The bio-based container of claim 1, wherein the bio-based PET polymer comprises from 25 to 45 weight percent of the diol component.

7. The bio-based container of claim 1, wherein the bio-based PET polymer comprises from 30 to 70 weight percent of the terephthalate component.

8. The bio-based container of claim 1, wherein the bio-based PET polymer comprises from 25 to 35 weight percent of the diol component and from 40 to 65 weight percent of the terephthalate component.

## Patentansprüche

1. Behälter auf biologischer Basis, umfassend ein Polyethylenterephthalat(PET)-Polymer auf biologischer Basis, wobei das Polymer Folgendes umfasst:
25 bis 75 Gewichtsprozent einer Terephthalatkomponente, wobei es sich bei der Terephthalatkomponente um Terephthalsäure handelt, und
20 bis 50 Gewichtsprozent einer Diolkomponente, wobei die Diolkomponente aus Ethylenglykol, Cyclohexandimethanol und einer Kombination davon ausgewählt ist,
wobei mindestens zehn Gewichtsprozent der Diolkomponente von mindestens einem Material auf biologischer Basis stammen,
wobei die Terephthalatkomponente nicht von mindestens einem Material auf biologischer Basis stammt und
wobei die Diolkomponente mindestens ein Gewichtsprozent Cyclohexandimethanol umfasst.

2. Behälter auf biologischer Basis nach Anspruch 1, wobei die gesamte Diolkomponente von mindestens einem Material auf biologischer Basis stammt.

3. Behälter auf biologischer Basis nach Anspruch 1, wobei das mindestens eine Material auf biologischer Basis aus Mais, Zuckerrohr, Rübe, Kartoffel, Stärke, einer Zitrusfrucht, einer holzigen Pflanze, cellulosischem Lignin, einem Pflanzenöl, einer Naturfaser, einem öligen Holzrohmaterial und einer Kombination davon ausgewählt ist.

4. Behälter auf biologischer Basis nach Anspruch 1, wobei das Polyethylenterephthalat-Polymer weiterhin eine ergänzende Komponente ausgewählt aus mindestens einem Färbemittel, mindestens einem gegenüber schnellem Wiedererhitzen resistenten Zusatzstoff, mindestens einem Gasbarrierenzusatzstoff, mindestens einem UV-blockenden Zusatzstoff und einer Kombination davon umfasst.

5. Behälter auf biologischer Basis nach Anspruch 1, wobei mindestens 20 Gewichtsprozent der Diolkomponente von mindestens einem Material auf biologischer Basis stammen.

6. Behälter auf biologischer Basis nach Anspruch 1, wobei das PET-Polymer auf biologischer Basis 25 bis 45 Gewichtsprozent der Diolkomponente umfasst.

7. Behälter auf biologischer Basis nach Anspruch 1, wobei das PET-Polymer auf biologischer Basis 30 bis 70 Gewichtsprozent der Terephthalatkomponente umfasst.

8. Behälter auf biologischer Basis nach Anspruch 1, wobei das PET-Polymer auf biologischer Basis 25 bis 35 Gewichtsprozent der Diolkomponente und 40 bis 65 Gewichtsprozent der Terephthalatkomponente umfasst.

## Revendications

1. Récipient d'origine biologique comprenant un polymère du type poly(téréphtalate d'éthylène) (PET) d'origine biologique, le polymère comprenant
de 25 à 75 pour cent en poids d'un composant de téréphtalate, le composant de téréphtalate étant l'acide téréphtalique ; et
de 20 à 50 pour cent en poids d'un composant de diol, le composant de diol étant choisi parmi l'éthylène glycol, le cyclohexanediméthanol et une combinaison de ceux-ci ;
au moins dix pour cent en poids du composant de diol étant issu d'au moins une matière d'origine biologique ;
le composant de téréphtalate n'étant pas issu d'au moins une matière d'origine biologique ; et
le composant de diol comprenant au moins un pour cent en poids de cyclohexanediméthanol.

2. Récipient d'origine biologique selon la revendication 1, le composant de diol étant entièrement issu d'au moins une matière d'origine biologique.

3. Récipient d'origine biologique selon la revendication 1, l'au moins une matière d'origine biologique étant choisie parmi le maïs, la canne à sucre, la betterave, la pomme de terre, l'amidon, un agrume, une plante ligneuse, la lignine cellulosique, une huile végétale, une fibre naturelle, une matière première de bois huileux et une combinaison de ceux-ci.

4. Récipient d'origine biologique selon la revendication 1, le polymère du type poly(téréphtalate d'éthylène) comprenant en outre un composant supplémentaire choisi parmi au moins un agent colorant, au moins un additif de résistance au réchauffage rapide, au moins un additif de barrière aux gaz, au moins un additif anti-UV et une combinaison de ceux-ci.

5. Récipient d'origine biologique selon la revendication 1, au moins 20 pour cent en poids du composant de diol étant issu d'au moins une matière d'origine biologique.

6. Récipient d'origine biologique selon la revendication 1, le polymère du type PET d'origine biologique comprenant de 25 à 45 pour cent en poids du composant de diol.

7. Récipient d'origine biologique selon la revendication 1, le polymère du type PET d'origine biologique comprenant de 30 à 70 pour cent en poids du composant de téréphtalate.

8. Récipient d'origine biologique selon la revendication 1, le polymère du type PET d'origine biologique comprenant de 25 à 35 pour cent en poids du composant de diol et de 40 à 65 pour cent en poids du composant de téréphtalate.
